# EUROPEAN PATENT SPECIFICATION

(11) **EP 2 988 496 B1**
(45) Date of publication and mention of the grant of the patent: **28.02.2018**
(21) Application number: 14785250.3
(22) Date of filing: 07.04.2014
(51) Int. Cl.: H04N 7/18, B60R 1/00, G06K 9/00, G06T 3/40

(54) **VEHICULAR IMAGE PROCESSING DEVICE**
BILDVERARBEITUNGSVORRICHTUNG FÜR EIN FAHRZEUG
DISPOSITIF DE TRAITEMENT D'IMAGE DE VÉHICULE

(30) Priority: 15.04.2013 JP 2013084843
(43) Date of publication of application: 24.02.2016
(73) Proprietor: DENSO CORPORATION, Kariya-shi, Aichi 448-8661 (JP)
(72) Inventor: WANG, Bingchen, Kariya-city Aichi 448-8661 (JP); YANAGAWA, Hirohiko, Kariya-city Aichi 448-8661 (JP); TAKEICHI, Masakazu, Kariya-city Aichi 448-8661 (JP)
(74) Representative: Cabinet Plasseraud
(86) International application number: PCT/JP2014/001973
(87) International publication number: WO 2014/171100

(56) References cited:
- JP-A- 2003 189 292
- JP-A- 2007 288 282
- JP-A- 2010 109 452
- US-A1- 2003 165 255
- US-A1- 2008 129 539
- SATO TAKAAKI ET AL: "Spatio-temporal bird's-eye view images using multiple fish-eye cameras", PROCEEDINGS OF THE 2013 IEEE/SICE INTERNATIONAL SYMPOSIUM ON SYSTEM INTEGRATION, IEEE, 15 December 2013 (2013-12-15), pages 753-758, XP032580168, DOI: 10.1109/SII.2013.6776674 [retrieved on 2014-03-20]
- Yu-Chih Liu ET AL: "Bird's-Eye View Vision System for Vehicle Surrounding Monitoring" In: "Robot Vision", 1 January 2008 (2008-01-01), Springer Berlin Heidelberg, Berlin, Heidelberg, XP055004046, ISBN: 978-3-54-078157-8 vol. 4931, pages 207-218, DOI: 10.1007/978-3-540-78157-8_16, * the whole document *

## Description

### TECHNICAL FIELD

The present disclosure relates to a vehicular image processing device that controls a display device to display an image captured around a vehicle.

### BACKGROUND ART

The known art uses an onboard camera to capture a situation around a vehicle, synthesizes several images captured by the onboard camera, and displays a synthesized image on a display device. A vehicular image processing device according to the known art (see patent literature 1) captures a forward image using a forward camera equipped to the vehicle and captures a backward image using a backward camera equipped to the vehicle, synthesizes the forward image and the backward image to generate a bird's-eye image as a synthetic image, and displays the bird's-eye image on a display device.

A joint between images may be misaligned when several images are synthesized to generate one bird's-eye image. The misalignment may cause an uncomfortable feeling on a user when the user views a displayed image or may fail to provide correct information, such as the correct position of a white line on a road, to the user. The misalignment between images may be caused by an unsatisfactory joint due to a difference between the actual installation position or installation orientation of the camera and recognition on an image processing apparatus, or may be caused an error in attribute information (such as a vehicle speed during image capturing) about the images.

### PRIOR ART LITERATURES

### PATENT LITERATURE

[Patent Literature 1] JP 2003-189292 A
[Patent Literature 2] US 2008-129539 A
[Patent Literature 3] US 2003-165255 A

### SUMMARY OF INVENTION

In view of the foregoing difficulties, it is an object of the present disclosure to provide a vehicular image processing device capable of generating an image by properly joining several images captured by a capturing portion.

A vehicular image processing device, which is applicable to a vehicle and equipped to the vehicle, includes a capturing portion, a display portion, an image generation portion, a misalignment calculation portion, a correction portion, and a display control portion. The capturing portion captures images within a specified range around the vehicle. The display portion displays a display purpose image generated based on the images captured by the capturing portion. The image generation portion joins the images captured by the capturing portion to generate the display purpose image to be displayed on the display portion. The misalignment calculation portion calculates a misalignment between the images at a joint portion of the images in a generation of the display purpose image. The correction portion corrects the display purpose image based on the misalignment. The display control portion controls the display portion to display the corrected display purpose image.

With the above device, a synthesized image can be properly generated by joining multiple images captured by the capturing portion.

### BRIEF DESCRIPTION OF DRAWINGS

The above and other objects, features and advantages of the present invention will become more apparent from the following detailed description made with reference to the accompanying drawings. In the drawings:
FIG. 1 is a diagram illustrating a configuration of an image display system according to an embodiment of the disclosure;
FIG. 2 is a diagram illustrating a camera and a capture range thereof;
FIG. 3 is a diagram illustrating a perspective transformation method;
FIG. 4A and Fig. 4B are diagrams illustrating vehicle surrounding images, respectively;
FIG. 5 is a diagram illustrating an overlap area between a past forward image and a current backward image;
FIG. 6 is a diagram illustrating a misalignment calculation method;
FIG. 7 is a diagram illustrating an intermediate area image before and after correction;
FIG. 8 is a diagram illustrating a vehicle surrounding image after correction;
FIG. 9 is a flowchart illustrating an image generation process;
FIG. 10 is a diagram illustrating camera and respective capture ranges of the cameras according to a first modification example;
FIG. 11 is a diagram illustrating a vehicle surrounding image according to the first modification example;
FIG. 12 is a diagram illustrating a camera and its capture range according to a second modification example;
FIG. 13 is a diagram illustrating a vehicle surrounding image according to the second modification example; and
FIG. 14 is a flowchart illustrating a misalignment calculation process based on periodicity of feature points.

### EMBODIMENTS FOR CARRYING OUT INVENTION

The following will describe an embodiment in which an image processing unit is applied to an image display system for a vehicle (automobile) as a vehicular image processing device with reference to the accompanying drawings.

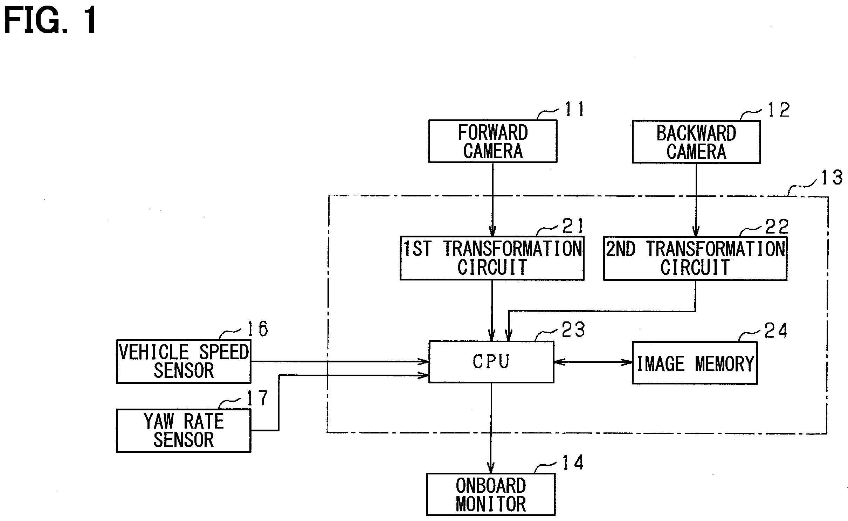

As illustrated in FIG. 1, the image display system includes a forward camera 11 and a backward camera 12 as capturing portions, an image processing unit 13, and an onboard monitor 14 as a display portion. The image processing unit 13 is supplied with data captured by the cameras 11 and 12. The onboard monitor 14 displays images generated by the image processing unit 13.

The forward camera 11 and the backward camera 12 are attached to a front portion and a rear portion of a vehicle, respectively. The forward camera 11 captures a specified front range of the vehicle. The backward camera 12 captures a specified rear range of the vehicle. Each of the cameras 11 and 12 is provided by a wide angle camera capable of capturing at a wide angle. The cameras 11 and 12 are capable of capturing at a view angle of 180 degrees forward and backward of the vehicle. Each of the cameras 11 and 12 is provided by a digital camera using a CCD or CMOS image sensor.

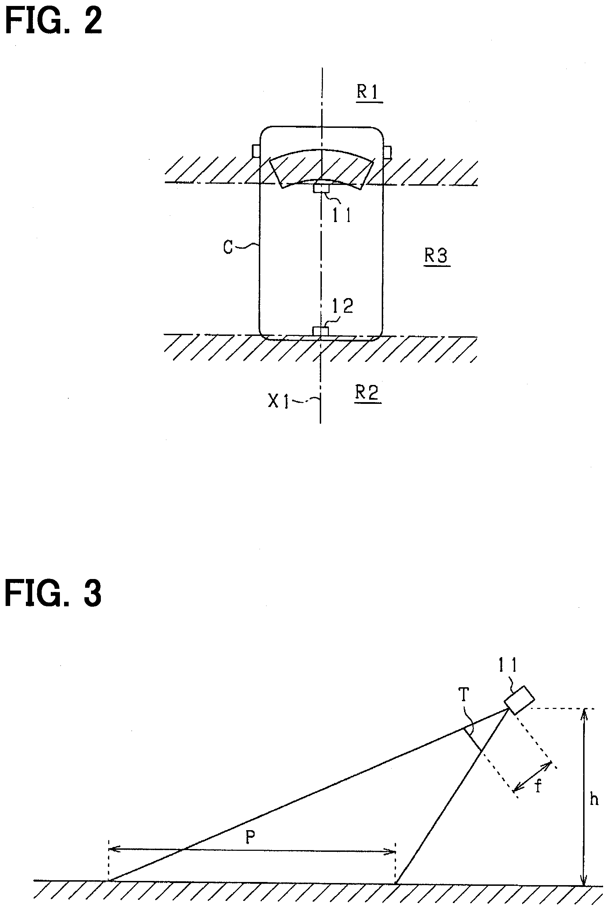

As illustrated in FIG. 2, the forward camera 11 is attached to a front portion of a roof of vehicle C. The backward camera 12 is attached to a rear portion of the roof of vehicle C. The forward camera 11 captures forward range R1. The backward camera 12 captures backward range R2. Forward range R1 at the front side of vehicle C parallels backward range R2 at the rear side of vehicle C. When vehicle C moves forward, forward range R1 captured by the forward camera 11 changes to backward range R2 captured by the backward camera 12 as vehicle C advances. When vehicle C moves backward, backward range R2 captured by the backward camera 12 changes to forward range R1 captured by the forward camera 11 as vehicle C retreats. The forward camera 11 and the backward camera 12 are arranged along the same line (center line X1) extending in a longitudinal direction of vehicle C. Each of the cameras 11 and 12 captures front area of the vehicle or rear area of the vehicle using center line X1 as the center of capturing.

The forward camera 11 is incapable of capturing a range toward the rear of the vehicle from the forward camera 11. The backward camera 12 is incapable of capturing a range toward the front of the vehicle from the backward camera 12. Thus, right area and left area of vehicle C, which corresponds to range R3 (intermediate area), become a dead area for the cameras 11 and 12.

The cameras 11 and 12 are angled downward with respect to the horizontal direction to capture ground surface in front area or in rear area of the vehicle. An image captured by the camera 11 or 12 includes a marked sign such as a white line on the ground surface (road surface).

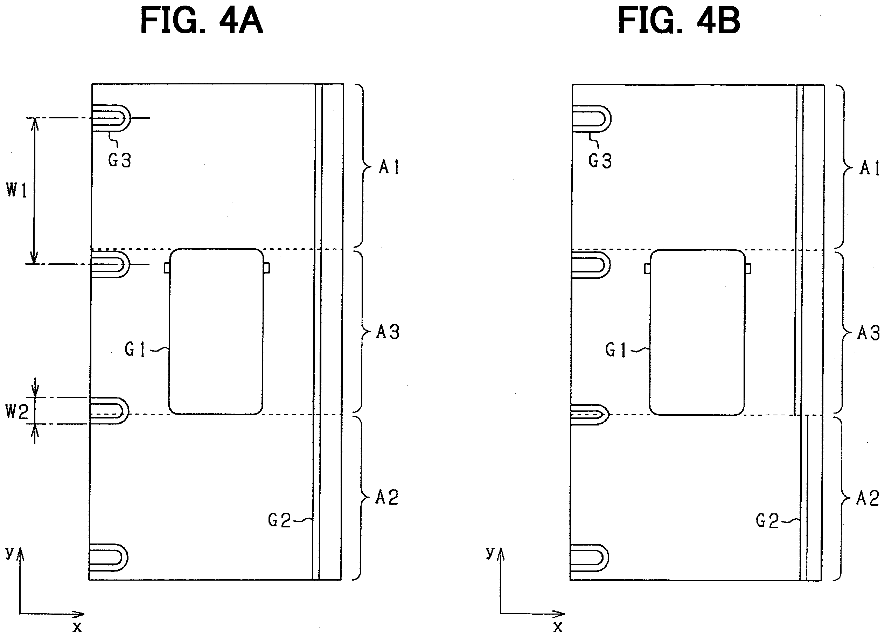

Returning back to the description of FIG. 1, the onboard monitor 14 is provided to an instrument panel, namely, is disposed at a position for a user in a vehicle compartment to view while driving. The dimension and the shape of the onboard monitor 14 are not specified. According to an embodiment, the onboard monitor 14 uses a display screen formed into a portrait display area (see FIG. 4A and FIG. 4B) so that the onboard monitor 14 displays a vehicle surrounding image in a range including the vehicle and forward and backward areas of the vehicle. The onboard monitor 14 can display information other than the vehicle surrounding image. When not displaying the vehicle surrounding image, the onboard monitor 14 may display, on display screen, various information including an image ahead of the vehicle (such as a night-vision image ahead of the vehicle) other than a captured image.

The image processing unit 13 synthesizes data captured by the cameras 11 and 12 to generate a display purpose image and controls the onboard monitor 14 to display the generated display purpose image. The display purpose image is generated based on data captured by the cameras 11 and 12 and is displayed on the onboard monitor 14. The display purpose image is also referred to as a synthetic image. The image processing unit 13 includes a first transformation circuit 21 and a second transformation circuit 22. The first transformation circuit 21 receives data captured by the forward camera 11. The second transformation circuit 22 receives data captured by the backward camera 12. The transformation circuits 21 and 22 perform perspective transformation on data captured by the forward camera 11 and the backward camera 12 to generate a bird's-eye image. The bird's-eye image corresponds to a capture range of the cameras 11 and 12 viewed vertically downward from a position above the vehicle. The transformation circuits 21 and 22 generate a forward bird's-eye image and a backward bird's-eye image, respectively.

The cameras 11 and 12 capture the front area of the vehicle and the rear area of the vehicle, respectively, at a specified time interval. The transformation circuits 21 and 22 acquire respective bird's-eye image at the front area of the vehicle and a bird's-eye image at the rear area of the vehicle at a specified time interval.

The following describes in more detail the perspective transformation performed by the transformation circuits 21 and 22. FIG. 3 illustrates capturing of the ground surface using the forward camera 11 positioned at height h from the ground surface as an example. The image captured by the forward camera 11 is an image captured on screen plane T, which is positioned at specified focal length f from the camera position. Thus, capturing the ground surface using the forward camera 11 is equal to performing the perspective transformation from a ground surface coordinate into a two-dimensional coordinate on screen plane T. The transformation circuits 21 and 22 perform perspective transformation reverse to the perspective transformation performed by the cameras 11 and 12. By the reverse transformation, the coordinate on screen plane T is transformed to the coordinate on the ground surface and an image on the ground surface (a plane image corresponding to range P in FIG. 3) is generated as a bird's-eye image.

Image data for the bird's-eye image generated by the transformation circuits 21 and 22 is input to a CPU 23. The CPU 23 generates vehicle surrounding image based on the forward bird's-eye image and the backward bird's-eye image. The vehicle surrounding image is generated as a bird's-eye image similarly to the image transformed by the transformation circuits 21 and 22.

The image display system according to the embodiment includes range R3 as a camera dead area around (side areas of) the vehicle. In the generation of range R3, which is the camera dead area, a past image is used. Herein, the past image is one of the images (forward bird's-eye image) captured by the forward camera 11 or one of the images (backward bird's-eye image) captured by the backward camera 12. Since the past image is used for generating the vehicle surrounding image, the image processing unit 13 includes image memory 24 to store past images. Vehicle C includes a vehicle speed sensor 16 and a yaw rate sensor 17. The vehicle speed sensor 16 detects a vehicle speed. The yaw rate sensor 17 detects a yaw rate (a change rate of rotation angle in the rotation direction).

Detection signals from the vehicle speed sensor 16 and the yaw rate sensor 17 are successively input to the CPU 23. The CPU 23 calculates a vehicle speed or a yaw rate as a traveling state of the vehicle based on the detection signals from the sensors 16 and 17. The purpose is to acquire the vehicle traveling state when the cameras 11 and 12 capture images. Another purpose is to calculate a travel distance and a rotation angle of vehicle C or a position and an orientation of vehicle C. The CPU 23 stores a past forward bird's-eye image and a past backward bird's-eye image in the image memory 24 at a specified time interval in association with the travel information (vehicle speed or yaw rate) of vehicle C in response to each capturing of an image.

The following will describe a generation of a vehicle surrounding image. When the vehicle moves forward, an image (past forward image) captured by the forward camera 11 in the past is read out from the image memory 24. The readout image is used as an image of range R3, which is the camera dead area. Current images (current forward image and current backward image) captured by respective forward camera 11 and backward camera 12 and the past forward image are used to generate a vehicle surrounding image. When the vehicle moves backward, an image (past backward image) captured by the backward camera 12 in the past is read out from the image memory 24. The readout image is used as an image of range R3, which is the camera dead area. Current images (current forward image and current backward image) captured by respective forward camera 11 and backward camera 12 and the past backward image are used to generate a vehicle surrounding image.

To generate the vehicle surrounding image, the CPU 23 arranges and connects the current forward image, the current backward image, and the past forward image (or the past backward image) in a longitudinal direction of the vehicle on the same plane. The CPU 23 displaces and rotates (Euclid transformation) the past image based on a current traveling state (vehicle speed or yaw rate) of vehicle C and a past traveling state (vehicle speed or yaw rate) of vehicle C. Herein, the past travel state is a travel state corresponding to the past image. Then, the CPU 23 synthesizes the current forward and backward images and the past image into one image.

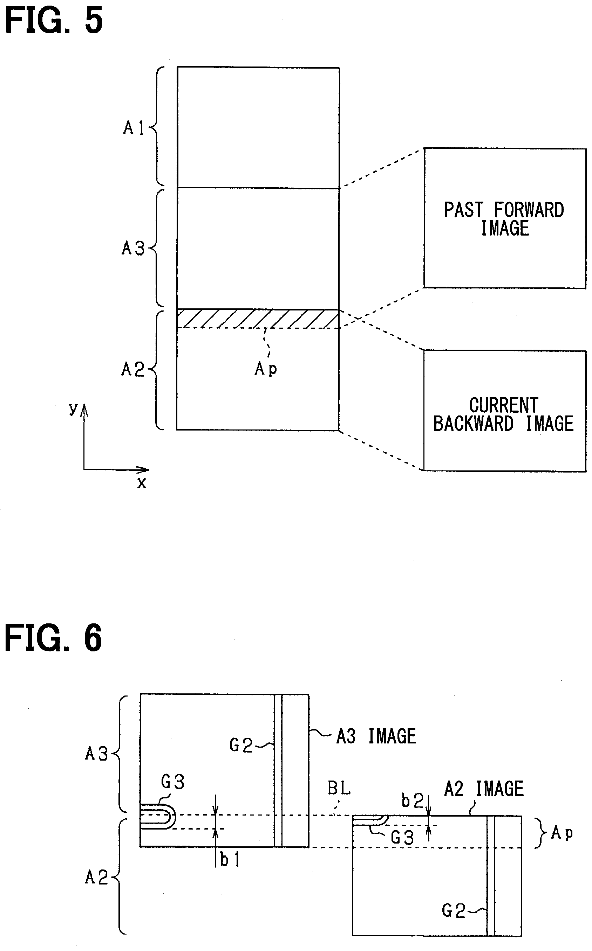

FIG. 4A and 4B each illustrates a vehicle surrounding image displayed on the display screen of the onboard monitor 14. The display screen includes forward display area A1, backward display area A2, and intermediate display area A3. Forward display area A1 displays a current forward image captured by the forward camera 11. Backward display area A2 displays a current backward image captured by the backward camera 12. Intermediate display area A3 displays the past forward image or the past backward image. Assume that FIG. 4A and Fig. 4B show a case in which the vehicle moves forward. In this case, intermediate display area A3 displays the past forward image. For the purpose of description convenience, FIG. 4A and Fig. 4B each defines the vehicle travel direction as y direction and defines a direction perpendicular to y direction as x direction. The same directions are applied to FIG. 5, which is to be described later. Display areas A1 through A3 may have same length or different lengths in the y direction. The intermediate display area A3 may be shorter than other areas in the y direction.

Intermediate display area A3 displays vehicle image G1 at the center of the display screen. Vehicle image G1 is displayed at a position that overlaps with the past forward image (or the past backward image). Displaying vehicle image G1 in the vehicle surrounding image helps a user to easily understand a surrounding situation (relative positional relationship) with reference to the vehicle. The vehicle surrounding image in FIG. 4A and FIG. 4B includes captured image information such as marked signs including a white line painted on the road surface. In the example shown in FIG. 4A and FIG. 4B, assume that vehicle C travels in a parking area. The vehicle surrounding image displays straight line image G2, which extends in the vehicle travel direction, on a right side of the vehicle. The vehicle surrounding image displays parking line image G3 corresponding to each parking space on a left side of the vehicle.

Suppose that display areas A1 through A3 of the onboard monitor 14 display the images correctly connected without misalignment. In this case, straight line image G2 is connected straight in the vehicle travel direction as illustrated in FIG. 4A. An interval between adjacent parking line images G3, namely, width W1 of each parking space is equal, and width W2 of each parking line image G3 is equal. Herein, the parking line image G3 has width W2 in the arrangement direction of several parking spaces.

However, the images displayed in display areas A1 through A3 may be misaligned at corresponding joints depending on an attaching condition of the cameras 11 and 12 or depending on a vehicle travel condition. An attachment error of each camera 11 and 12 may cause a deviation of a camera capture direction. The deviation of the camera capture direction may cause misalignment in at least one of x direction or y direction in FIG. 4A and FIG. 4B when joining bird's-eye images transformed by the transformation circuits 21 and 22. A vehicle travel state detected by the vehicle speed sensor 16 or the yaw rate sensor 17 may differ from the actual vehicle travel state. In such a case, a past image is incorrectly shifted and rotated to cause misalignment in an image joining. A detection error in the vehicle travel state is considered to occur when a transient change in the vehicle behavior is not correctly tracked or when the vehicle speed is incorrectly detected due to a tire slip.

Images are easily misaligned at a joint that connects images captured by different cameras. When vehicle C moves forward, misalignment easily occurs at a joint between the current backward image displayed in backward display area A2 and the past forward image displayed in intermediate display area A3. When vehicle C moves backward, misalignment easily occurs at a joint between the current forward image displayed in forward display area A1 and the past backward image displayed in intermediate display area A3.

FIG. 4B illustrates misalignment at a joint between the current backward image displayed in backward display area A2 and the past forward image displayed in intermediate display area A3. As illustrated in FIG. 4B, straight line image G2 is misaligned in the x direction. Parking line image G3 is misaligned in the y direction. As a result, only parking line image G3 positioned around the joint between the current backward image and the past forward image is deformed in the y direction (W2 is decreased) compared with other parking line images G3.

To solve this issue, the embodiment calculates misalignment at each joint between images and corrects the image based on the misalignment to correctly generate a vehicle surrounding image.

The following describes the misalignment calculation at an image joint. The following description assumes that vehicle C moves forward.

When the vehicle moves forward, misalignment easily occurs at a joint between the current backward image displayed in backward display area A2 and the past forward image displayed in intermediate display area A3. A boundary between display areas A2 and A3 forms an overlap area where the current backward image overlaps with the past forward image. As illustrated in FIG. 5, the length of the past forward image in the y direction is greater than the length of intermediate display area A3 in the y direction. Thus, the past forward image partially overlaps with backward display area A2 when the past forward image is placed in intermediate display area A3. Overlap area Ap generated in the backward display area A2 includes a boundary area between backward display area A2 and intermediate display area A3. The past forward image and the current backward image overlap with each other in overlap area Ap.

The CPU 23 extracts feature points from two images overlapping in overlap area Ap. The CPU 23 compares the feature points of the same type with each other to calculate the misalignment between the images. For example, the CPU 23 extracts a marked sign on the road surface as a feature point. The CPU 23 compares the feature points using feature quantity, such as the brightness distribution around the feature points for calculating the misalignment between images.

The misalignment calculation will be described more specifically with reference to FIG. 6. FIG. 6 illustrates a current backward image displayed in backward display area A2 and a past forward image displayed in intermediate display area A3. For the purpose of illustration, these images are referred to as an A2 image and an A3 image, respectively. The CPU 23 compares a part of the A2 image with a part of the A3 image. Herein, a part of the A2 image is a part that overlaps with the A3 image in overlap area Ap, and a part of the A3 image is a part that overlaps with the A2 image in the overlap area. By the comparing, the CPU 23 calculates the misalignment in the x direction and the y direction. Suppose that straight line image G2, which is used as a feature point, is misaligned in the x direction when the A2 and A3 images are overlapped. Then, the CPU 23 calculates a misaligned dimension as the misalignment in the x direction.

The CPU 23 may use the parking lines G3 in the A2 image and A3 image as feature points, and calculate length b1 of parking line G3 in the A2 image and calculate length b2 of parking line G3 in the A3. The lengths are calculated in the y direction with reference to boundary line BL between backward display area A2 and intermediate display area A3. The CPU 23 compares lengths b1 and b2 to calculate the misalignment in the y direction.

When the vehicle moves backward, overlap area Ap is generated at a boundary between forward display area A1 and intermediate display area A3. The CPU 23 calculates the misalignment between the current forward image and the past backward image in overlap area Ap in similar way.

The CPU 23 calculates a correction parameter used for correcting a past image (past forward image or past backward image), based on the misalignment between images in overlap area Ap. The CPU 23 corrects the past image based on the perspective transformation using the correction parameter. Suppose that overlap area Ap indicates misalignment between a feature point in the current image and a feature point in the past image in the x direction. Then, the CPU 23 performs the perspective transformation to stretch or shrink the past image in the x direction. Suppose that overlap area Ap indicates misalignment between a feature point in the current image and a feature point in the past image in the y direction. Then, the CPU 23 performs the perspective transformation to stretch or shrink the past image in the y direction.

In the present embodiment, the overlap area Ap is set on only one end of intermediate display area A3 in the y direction. The CPU 23 corrects the misalignment of the past image as a whole in intermediate display area A3 based on the misalignment in overlap area Ap. The CPU 23 performs no correction to the image at the other end where no misalignment is calculated. That is, the CPU 23 performs the correction based on the perspective transformation on the assumption that one end of intermediate display area A3, which corresponds to overlap area Ap, needs to be corrected by a maximum correction amount in the y direction, and the opposite end of intermediate display area A3 in the y direction needs to be corrected by a correction amount of zero.

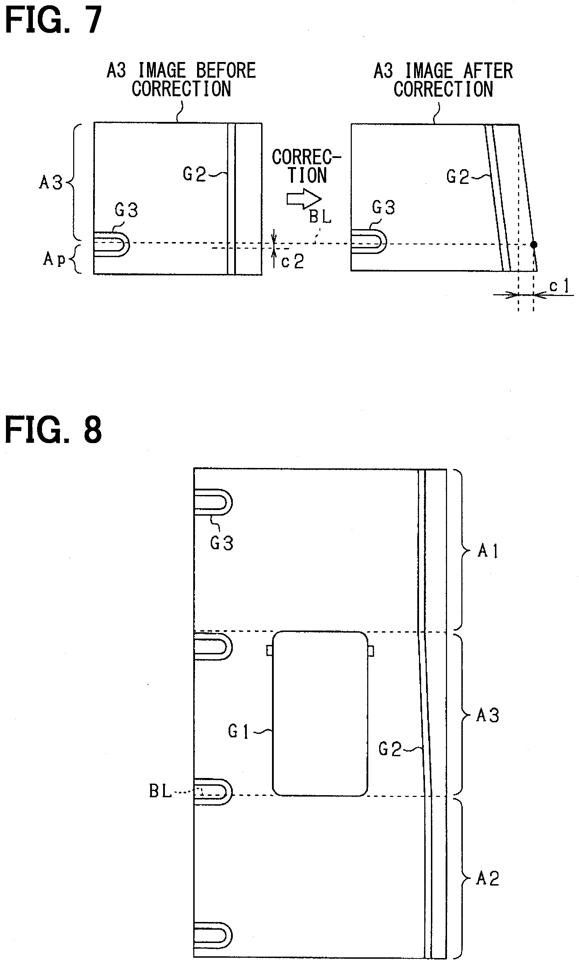

As illustrated in FIG. 7, overlap area Ap causes misalignment c1 in the x direction and misalignment c2 in the y direction. The rectangular image before the correction is perspectively transformed into a trapezoidal image by correcting the overlap area Ap with the correction amount c1 in the x direction and by correcting the overlap area Ap with the correction amount c2 in the y direction. The image is stretched (stretched in FIG. 7) correspondingly to c1 with reference to boundary line BL as the correction in the x direction. The image is shrunk (shrunk in FIG. 7) correspondingly to c2 with reference to boundary line BL as the correction in the y direction.

As illustrated in FIG. 8, after the correction, straight line image G2 in the corrected A3 image is perspectively transformed to form an acute angle with reference to the y direction. Straight line image G2 in the A1 image is connected to straight line image G2 in the A2 image. This solves the misalignment between straight line image G2 in the A3 image and straight line image G2 in the A2 image while maintaining the connection between straight line image G2 in the A1 image and straight line image G2 in the A2 image. Compared to the image before the correction (FIG. 4B), parking line image G3 in the A3 image is displaced toward the front of the vehicle by a dimension c2 with reference to boundary line BL, which is a line between backward display area A2 and intermediate display area A3. The displacement causes the position of parking line image G3 in the corrected A3 image to be equal to the position of parking line image G3 in backward display area A2 with reference to boundary line BL, which is between backward display area A2 and intermediate display area A3. Thus, the misalignment of parking line image G3 with reference to boundary line BL can be solved.

An inconvenience may result from the misalignment of a white line included in the vehicle surrounding image displayed on the onboard monitor 14 when a vehicle travels at a relatively low speed, specifically, in a parking area. While traveling in a parking area, a driver may often gaze at a marked sign on the road surface to park the vehicle at an intended parking space. According to the present embodiment, the onboard monitor 14 displays the vehicle surrounding image as a bird's-eye image when the vehicle travels at a specified low speed.

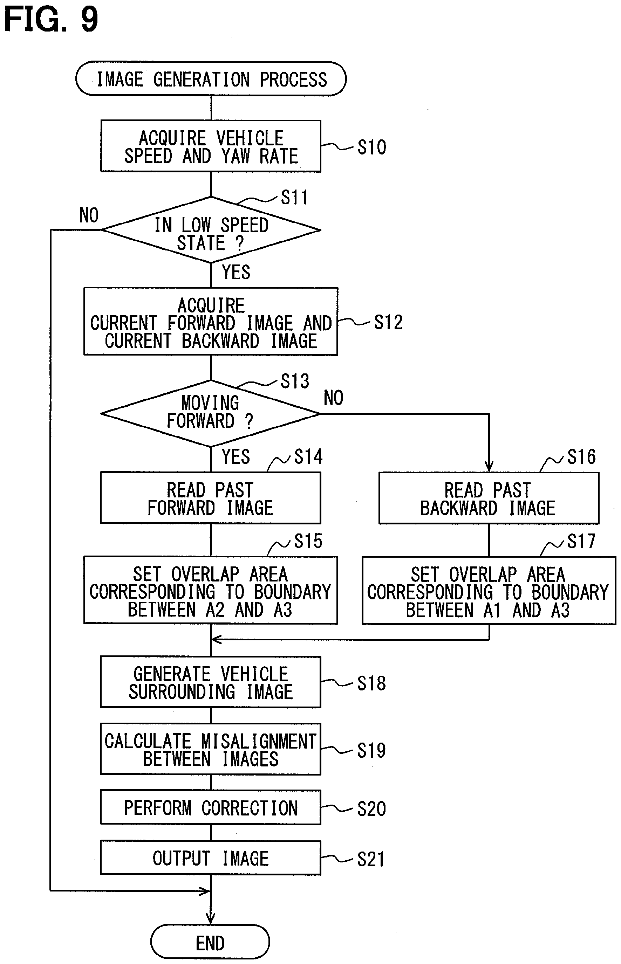

FIG. 9 is a flowchart illustrating an image generation process according to the present embodiment. The CPU 23 in the image processing unit 13 executes the image generation process at a predetermined time interval.

At S10, the CPU 23 acquires a vehicle speed and a yaw rate of the vehicle. At S11, the CPU 23 determines whether or not the vehicle travels in a low speed state. Specifically, the CPU 23 determines whether the current speed of the vehicle is equal to or lower than a predetermined speed (e.g., 30 km/h). Alternatively, the CPU 23 may determine at S11 whether or not the vehicle is currently traveling in a parking area based on information from an automobile navigation system. When the result of S11 is NO, the CPU 23 terminates the process. When S11 is negated, the onboard monitor 14 displays navigation information or travel state information, namely, an information image other than the vehicle surrounding image.

When parking the vehicle, a user manipulates the vehicle with reference to a parking purpose target such as a white line. When images are misaligned, the user may feel it difficult to recognize the vehicle from the parking purpose target. The CPU 23 corrects an image and controls the onboard monitor 14 to display the corrected image when the user intends to park the vehicle. Thus, the user can be properly provided with the information helpful for the parking. The image processing unit 13 may acquire a vehicle position from a GPS sensor equipped to the vehicle and determine whether the user intends to park the vehicle or not.

When the result of S11 is YES, the CPU 23 proceeds to S12. At S12, the CPU 23 acquires bird's-eye images (current forward image and current backward image) transformed in the first transformation circuit 21 and the second transformation circuit 22. The CPU 23 temporarily stores the current forward image and the current backward image in work memory and also stores the images as history images in the image memory 24. The CPU 23 stores the history image associated with the most recent vehicle travel state, which is provided at least one of the vehicle speed or the yaw rate. A history image stored in the image memory 24 is hereinafter also referred to as a past image.

At S13, the CPU 23 determines whether or not the vehicle moves forward. This determination is performed based on the shift position of a vehicle transmission, for example. The CPU 23 proceeds to S14 when the vehicle moves forward. The CPU 23 proceeds to S16 when the vehicle moves backward. At S14, the CPU 23 reads a past forward image to be displayed in intermediate display area A3 from the image memory 24. Favorably, the image memory 24 chronologically stores several past forward images so as to select an image used for the current image generation based on the vehicle speed. At S15, the CPU 23 sets overlap area Ap corresponding to a boundary between backward display area A2 and intermediate display area A3.

At S16, the CPU 23 reads a past backward image to be displayed in intermediate display area A3 from the image memory 24. Favorably, the image memory 24 chronologically stores several past backward images so as to select an image used for the current image generation based on the vehicle speed. At S17, the CPU 23 sets overlap area Ap corresponding to a boundary between forward display area A1 and intermediate display area A3.

The CPU 23 acquires the current forward image and the current backward image at S11. The CPU 23 acquires the past forward image at S14 or acquires the past backward image at S16. At S18, the CPU 23 arranges the acquired images on the same plane and synthesizes the images into one image to generate a vehicle surrounding image. The CPU 23 synthesizes (joins) the images based on the current vehicle travel state and information related to the vehicle travel when the past image was captured.

At S19, the CPU 23 calculates misalignment between the images in overlap area Ap. At S20, the CPU 23 corrects the vehicle surrounding image based on the misalignment between the images. Specifically, the CPU 23 corrects the past image displayed in intermediate display area A3. At S21, the CPU 23 outputs the corrected vehicle surrounding image to the onboard monitor 14 and terminates the process.

In the image generation process executed by the CPU 23 of the image processing unit 13, the process executed at from S13 to S18 functions as an image generation portion. The process executed at S19 functions as a misalignment calculation portion. The process executed at S20 functions as a correction portion. The process executed at S21 functions as a display control portion.

The portions are classified in terms of the functions of the vehicular image processing device for descriptive purposes. The inside of the vehicular image processing device need not be physically divided into seven portions as described above. The portions are available in the form of hardware using a logic circuit or a CPU or in the form of software as a computer program or part of the computer program.

The following will describe advantages provided by the present embodiment.

The CPU 23 joins several images captured by the cameras 11 and 12 to generate a display purpose image and displays the generated display purpose image on the onboard monitor 14. Thus, the onboard monitor 14 can display the image having a wider capture range than a single image captured by one camera. Two joined images may be misaligned, for example, when the mounting positions of the cameras 11 and 12 are displaced from initial mounting positions. In this case, the CPU 23 calculates misalignment between the images at a joint portion. Specifically, the CPU 23 calculates the misalignment between the images at the joint between the current forward image and the intermediate area image or at the joint between the current backward image and the intermediate area image. The CPU 23 may also calculate the misalignment at both joints. The CPU 23 corrects the display purpose image based on the calculated misalignment. As a result, the onboard monitor 14 can properly display the display purpose image.

The CPU 23 arranges the images to be overlapped in overlap area Ap and calculates the misalignment between the images in overlap area Ap. The CPU 23 can easily calculate the misalignment in a direction (y direction) along which the images are arranged and also in a direction (x direction) perpendicular to the direction along which the images are arranged. In particular, the CPU 23 can easily calculate the misalignment in the direction (y direction) along which the images are arranged. The CPU 23 performs the correction based on the calculated misalignment for properly joining the images.

An error in attaching the cameras 11 and 12 may cause a deviation of a camera capture direction, and this may cause misalignment at a joint between images, which are captured by the cameras 11 and 12 and need to be joined together. The CPU 23 corrects display purpose images captured by the different cameras 11 and 12 for eliminating the misalignment between the images at the joint. As a result, the onboard monitor 14 can properly display the display purpose image.

The CPU 23 may join several images based on a vehicle travel state. When the acquired vehicle travel state is improper, misalignment occurs at a joint between the past image and the current image. The CPU 23 calculates misalignment between the past image and the current image and corrects a display purpose image based on the calculated misalignment. As a result, the CPU 23 can properly display the image even though the acquired travel state is improper.

The CPU 23 determines whether the vehicle moves forward or backward. When the vehicle moves forward, the CPU 23 sets overlap area Ap at a boundary between display areas A2 and A3. When the vehicle moves backward, the CPU 23 sets overlap area Ap at a boundary between display areas A1 and A3. The CPU 23 can calculate and correct the misalignment at a location where images are easily misaligned when three images are synthesized into one vehicle surrounding image. This can restrict an excessive increase of calculation load for calculating the misalignment and performing the correction.

Correcting an entire image can restrict an uncomfortable feeling felt by a user. However, when a non-targeted end portion of an image is corrected, the correction may adversely cause further misalignment between images. To avoid this, an entire image is set as a target of the correction and the correction is performed to cause no change at an end where no misalignment is detected. This can solve the disadvantage of causing further misalignment due to the correction.

### (Other Embodiments)

The foregoing embodiment may be modified as follows.

In the foregoing embodiment, the overlap area Ap is set at only one end of intermediate display area A3 in the y direction and a past image in intermediate display area A3 is corrected based on the misalignment existing in the overlap area Ap. This configuration may be modified as follows. Overlap areas Ap may be set at both ends of intermediate display area A3 in the y direction. The CPU 23 corrects a past image in intermediate display area A3 based on a misalignment amount in each overlap area Ap. When the vehicle moves forward, the CPU 23 calculates a misalignment amount between the current forward image and the past forward image, and at the same time, calculates a misalignment amount between the past forward image and the current backward image. Then, the CPU 23 may correct the past forward image based on misalignment amounts in both overlap areas corresponding to both ends of intermediate display area A3.

In the foregoing embodiment, several capturing portions (forward camera 11 and backward camera 12) are used for capturing images in several ranges and a current image and a past image are synthesized to generate a vehicle surrounding image. This configuration may be modified to a first modification or a second modification described below.

### (First Modification)

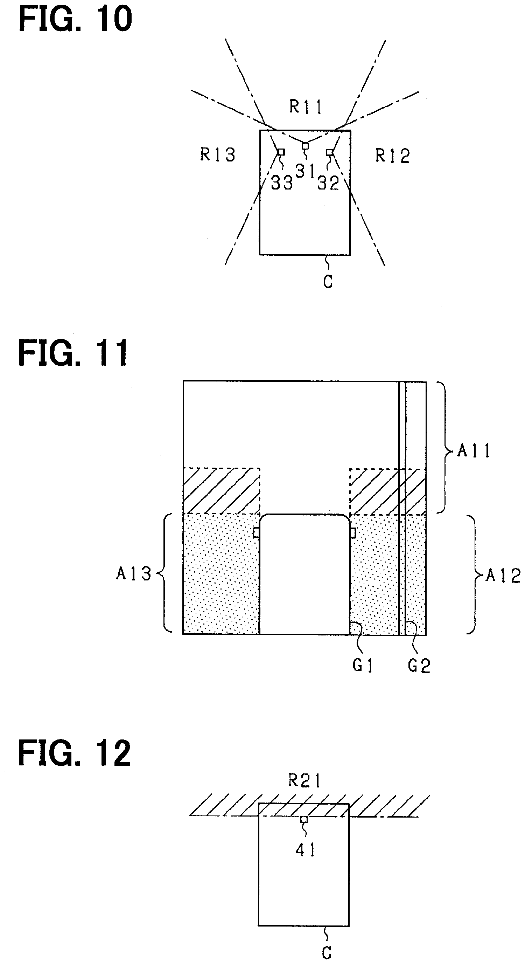

In this modification, several current images captured by several capturing portions may be synthesized to generate a vehicle surrounding image without using a past image. Specifically, as shown in an example illustrated in FIG. 10, a vehicle is equipped with a first camera 31 capturing a forward area of the vehicle, a second camera 32 capturing a right area of the vehicle, and a third camera 33 capturing a left area of the vehicle. Images captured by the cameras 31 through 33 are input to the image processing unit 13. The image processing unit 13 performs image transformation process similar to the foregoing embodiment. As capture ranges, the cameras 31 through 33 have forward range R11, right side range R12, and left side range R13, respectively. Forward range R11 partially overlaps with right side range R12. Forward range R11 partially overlaps with left side range R13. In FIG. 10, a view angle of each camera is set to be smaller than 180 degrees. However, the angle may be set to any value and may be set to 180 degrees similarly to FIG. 2.

FIG. 11 illustrates a vehicle surrounding image displayed on a display screen of the onboard monitor 14. The display screen displays the vehicle surrounding image except the rear area of vehicle image G1. Forward display area A11, right-side display area A12, and left-side display area A13 are defined around vehicle image G1. The display areas display images currently captured by the first through third cameras 31 through 33. Right-side display area A12 and left-side display area A13 are shown by a dotted pattern.

Images captured by the different cameras are joined at a boundary between the displays areas A11 and A12 and a boundary between the displays areas A11 and A13. The images may be misaligned at the corresponding joints. Since capture ranges of the cameras 31 and 32 overlap with each other and capture ranges of the cameras 31 and 33 overlap with each other, overlap area (hatched in FIG. 11) is generated in captured images displayed in forward display area A11 and one of side display areas A12 and A13. The CPU 23 calculates the misalignment between the images in the overlap area and corrects at least one of the images based on the misalignment. For example, the CPU 23 corrects an image displayed in right-side display area A12 and an image displayed in left-side display area A13 based on the perspective transformation.

In this modification, several current images captured by several cameras are synthesized to generate a vehicle surrounding image. As another example, two images captured by a front camera and a right-side camera (or a left-side camera) may be synthesized to generate a vehicle surrounding image. As another example, four current images captured by four cameras attached to the front, the rear, the right side, and the left side of the vehicle may be synthesized to generate a vehicle surrounding image.

In this modification, images captured by the cameras 31 through 33 are joined together. Thus, the onboard monitor 14 can display an area wider than an image captured by a single camera. The CPU 23 detects misalignment between images captured by the cameras 31 through 33 in an overlap area between areas corresponding to the captured images. The CPU 23 corrects images based on the misalignment so that the joined image can be displayed properly. By performing the correction, the onboard monitor can properly display an image even when at least one of the cameras is displaced from an initial mounting position and captured images cannot be correctly joined together with each other.

### (Second Modification)

In this modification, a current image and a past image captured by one capturing portion are synthesized to generate a vehicle surrounding image. As illustrated in FIG. 12, a vehicle is equipped with a forward camera 41 used for capturing forward area of the vehicle. An image captured by the forward camera 41 is input to the image processing unit 13. The image processing unit 13 performs similar image transformation process as described above. It is preferable that capture range R21 of the forward camera 41 is set equal to the forward range R1 as the foregoing embodiment shown in FIG. 2. The image processing unit 13 controls the image memory to sequentially store a captured image ahead of the vehicle as a past image in association with the vehicle travel state (similar to the configuration in FIG. 1).

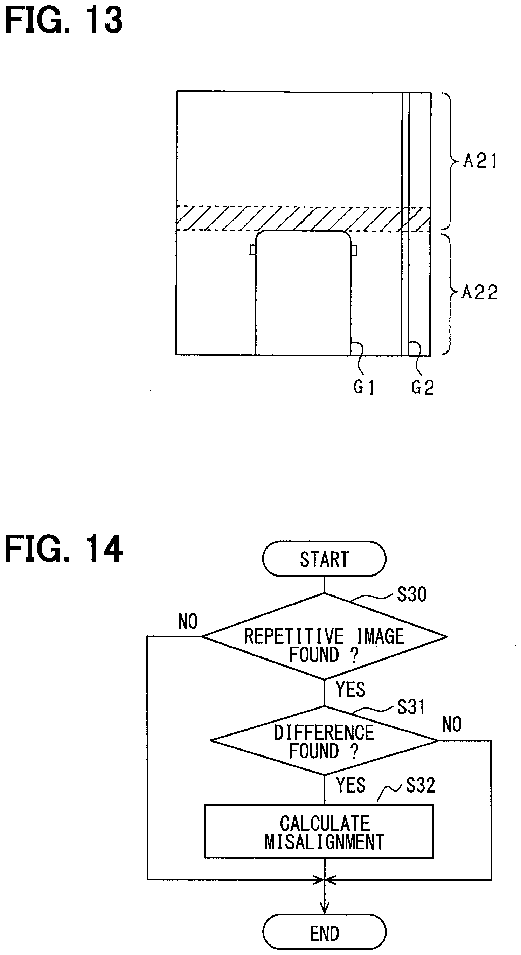

FIG. 13 illustrates a vehicle surrounding image displayed on a display screen of the onboard monitor 14. The display screen includes forward display area A21 disposed corresponding to the front area of vehicle image G1 and side display area A22 disposed corresponding to the side area of vehicle image G1. The display areas A21 and A22 display a current image and a past image, respectively. The CPU 23 joins the current image and the past image at a boundary between display areas A21 and A22 so that the images partially overlap with each other. The CPU 23 calculates misalignment between the images in an overlap area (hatched area in the drawing) and corrects at least one of the two images to eliminate the misalignment. For example, the CPU 23 corrects the past image as a correction target based on the perspective transformation.

The example shown in FIG. 13 uses one current image and one past image to generate a vehicle surrounding image. As another example, one current image and two (or more) past images may be used to generate a vehicle surrounding image. In this case, the past image may be used to generate an image at the rear area of the vehicle. The CPU 23 may further calculate misalignment at joint between two past images and correct at least one of the two past images based on the misalignment.

In the foregoing embodiment, image feature points in overlap area Ap are compared for calculating misalignment, and image correction is carried out corresponding to the calculated misalignment amount. In addition, the image misalignment may be calculated based on the periodicity of feature points in the current image and in the past image, image correction can be carried out corresponding to the calculated misalignment amount.

FIG. 14 is a flowchart illustrating a process for calculating misalignment based on the periodicity of feature points. The image processing unit 13 performs this process at S19 in the image generation process illustrated in FIG. 9.

At S30, the image processing unit 13 determines whether a display purpose image for displaying a surrounding area of the vehicle includes several capturing targets (repetitive images). Herein, the several capturing targets, which are also referred to as repetitive images, have equal shape and dimension and are arranged in the vehicle travel direction. When the display purpose image includes repetitive images (S30: YES), the image processing unit 13 proceeds to S31 and determines whether at least one of the shape and the dimension of the capturing target disposed at a joint between two images differs from the shape and the dimension of the capturing target disposed at a location other than the joint. When the image processing unit 13 determines that a difference is found in the shape and the dimension of the capturing target disposed at the joint (S31: YES), the image processing unit 13 proceeds to S32 to calculate misalignment based on the difference in the shape and the dimension of the capturing target and terminates the process.

Capturing targets having equal shape and size may appear at a specified interval along the vehicle travel direction when a bird's-eye image is displayed to cover a range including the front area and the rear area of the vehicle. This configuration can restrict a shape or dimension difference between the display image (bird's-eye image) including the capturing target disposed at the front area of the vehicle and the display image (bird's-eye image) including the capturing target disposed at the rear area of the vehicle.

As illustrated in FIG. 4A and FIG. 4B, suppose that the vehicle travels in a parking area along a direction along which parking spaces are arranged. Each of the parking spaces is marked by a white line. In this case, the white line, which corresponds to the capturing target, repeatedly appears at a specified interval. The configuration can correct a difference in the shape or the dimension of the target white line disposed at the joint when the target white line is different from other white lines. Thus, white lines having equal shape and size can be displayed corresponding to the actual condition.

The vehicular image processing device may further include a selection portion for selecting a correction target from several images. Captured images used to generate a display image may include an image that was captured during the occurrence of a vehicle vibration excessing a specified level. Errors may be generated in the image captured during the vehicle vibration at a higher probability, and thus, the image captured during the vehicle vibration may be selected as a correction target by the selection portion.

In the foregoing embodiment, the past image is corrected corresponding to the misalignment generated in overlap area disposed between two images. As another example, the current image may be corrected corresponding to the misalignment. As another example, both the current image and the past image may be corrected corresponding to the misalignment.

The configuration may correct an image when a yaw rate detected by the yaw rate sensor 17 exceeds a specified value. A relatively large yaw rate may easily cause a difference between the actual vehicle position and a calculated vehicle position.The difference in position may easily cause misalignment between images. Thus, by correcting the image in response to a detection of a relatively large yaw rate, the images can be properly corrected.

The vehicle position and orientation may be acquired from a GPS sensor or a digital compass.

## Claims

1. A vehicular image processing device applicable to a vehicle (C) and being equipped to the vehicle, the vehicular image processing device comprising:
a capturing portion (11, 12) capturing images within a specified range around the vehicle (C);
a display portion (14) displaying a display purpose image generated based on the images captured by the capturing portion (11, 12);
an image generation portion joining the images captured by the capturing portion (11, 12) to generate the display purpose image to be displayed on the display portion (14);
a misalignment calculation portion calculating a misalignment between the images at a joint portion of the images in a generation of the display purpose image;
a correction portion correcting the display purpose image based on the misalignment;
a display control portion controlling the display portion (14) to display the corrected display purpose image;
a state acquiring portion acquiring a travel state of the vehicle (C) when the capturing portion (11, 12) captures the image; and
a storage portion storing the image captured by the capturing portion (11, 12) as a history image, wherein
the image generation portion joins the history image stored in the storage portion with the image captured at a current time by the capturing portion (11, 12) based on the travel state of the vehicle (C) to generate the display purpose image, and
the misalignment calculation portion calculates the misalignment between the history image and the image captured at the current time, **characterized in that**
the vehicle (C) includes a forward capturing device (11) and a backward capturing device (12) as the capturing portion, the forward capturing device (11) captures a front area (R1) of the vehicle as a capture range and the backward capturing device (12) captures a rear area (R2) of the vehicle as a capture range, the images captured by both the forward capturing device (11) and the backward capturing device (12) are used to generate a vehicle surrounding image indicating a surrounding area of the vehicle,
the surrounding area of the vehicle (C) includes an intermediate area (R3) located at an intermediate portion between the capture range of the forward capturing device (11) and the capture range of the backward capturing device (12), and the intermediate area (R3) is not overlapped with the capture range of the forward capturing device (11) or with the capture range of the backward capturing device (12),
the image generation portion uses, as an intermediate area image, a history image captured by one capturing device that is positioned at a front side in a travel direction of the vehicle (C) among the two capturing devices, and the intermediate area image indicates the intermediate area (R3),
the image generation portion joins the image captured by the forward capturing device (11), the image captured by the backward capturing device (12), and the intermediate area image to generate the vehicle surrounding image as the display purpose image, and
the misalignment calculation portion calculates the misalignment between the images at at least one of a joint portion joining the image captured by the forward capturing device (11) with the intermediate area image or a joint portion joining the image captured by the backward capturing device (12) with the intermediate area image, wherein
the correction portion calculates the misalignment between the images at at least one of the joint portion joining the image captured by the forward capturing device (11) with the intermediate area image or the joint portion joining the image captured by the backward capturing device (12) with the intermediate area image, and
the correction portion performs a correction to the intermediate area image by processing the intermediate area image in a manner that the misalignment generated at one end of the intermediate area image is decreased and an opposite end of the intermediate area (R3) is maintained without change.

2. The vehicular image processing device according to claim 1, wherein
the image generation portion arranges the images in an overlapped manner at the joint portion of the images, and
the misalignment calculation portion calculates the misalignment within an overlap area between the images.

3. The vehicular image processing device according to claim 1 or 2, wherein
the capturing portion (11, 12) includes a plurality of capturing devices (11, 12) each of which has a capture range different from one another, and
the image generation portion joins the images respectively captured by the plurality of capturing devices.

4. The vehicular image processing device according to claims 1 to 3, further comprising:
a determination portion determining whether the vehicle (C) is in a forward movement state or in a backward movement state, wherein
the image generation portion arranges the images in an overlapped manner at at least one of the joint portion joining the image captured by the forward capturing device (11) with the intermediate area image or the joint portion joining the image captured by the backward capturing device (12) with the intermediate area image corresponding to one of the forward movement state or the backward movement state of the vehicle, and
the misalignment calculation portion calculates the misalignment at the joint portion between the images arranged in the overlapped manner.

5. The vehicular image processing device according to any one of claims 1 to 4, further comprising:
a difference determination portion determining whether an image of one of a plurality of capturing targets (G3) disposed at the joint portion of the images is different in shape or dimension from images of the remaining capturing targets (G3) disposed at respective positions other than the joint portion under a condition that the images captured by the capturing portion (11, 12) include images of the plurality of capturing targets (G3) that have equal shape and equal size and are arranged in the travel direction of the vehicle (C),
wherein the correction portion corrects the display purpose image by eliminating a difference in shape or dimension of the image of the one of plurality of capturing targets (G3) disposed at the joint portion when the difference determination portion determines an occurrence of a difference.

6. The vehicular image processing device according to any one of claims 1 to 3, wherein
the capturing portion (11, 12) captures the images at a specified interval,
the storage portion stores the images captured at the specified interval by the capturing portion (11, 12) as history images,
the image generation portion determines one of the history images stored in the storage portion as a target image with reference to the travel state acquired by the state acquiring portion, and joins the target image with the image captured at a current time by the capturing portion (11, 12) to generate the display purpose image, and
the misalignment calculation portion calculates the misalignment between the target image and the image captured at the current time.

7. The vehicular image processing device according to claim 6, wherein
the image generation portion uses, as an intermediate area image, a target image determined from the history images captured by one of the forward capturing device (11) or the backward capturing device (12) and stored in the storage portion, the one of the forward capturing device (11) or the backward capturing device (12) is a capturing device positioned at a front side in a travel direction of the vehicle among the forward capturing device and the backward capturing device (12), and the intermediate area image indicates the intermediate area (R3),
the image generation portion joins the image captured at a current time by the forward capturing device (11), the image captured at a current time by the backward capturing device (12), and the intermediate area image to generate a vehicle surrounding image, which indicates the surrounding area of the vehicle, as the display purpose image,
the misalignment calculation portion calculates the misalignment between the images at at least one of a joint portion joining the image captured at the current time by the forward capturing device (11) with the intermediate area image or a joint portion joining the image captured at the current time by the backward capturing device (12) with the intermediate area image,
the correction portion corrects the vehicle surrounding image based on the misalignment calculated by the misalignment calculation portion, and
the display control portion controls the display portion (14) to display the vehicle surrounding image corrected by the correction portion as the display purpose image.

8. The vehicular image processing device according to claim 7, further comprising:
a determination portion to determine whether the vehicle (C) is in a forward movement state or in a backward movement state, wherein,
when the determination portion determines that the vehicle (C) is in the forward movement state, the image generation portion overlaps the image captured at the current time by the backward capturing device (12) with the intermediate area image at the joint portion joining the image captured at the current time by the backward capturing device (12) with the intermediate area image,
when the determination portion determines that the vehicle (C) is in the backward movement state, the image generation portion overlaps the image captured at the current time by the forward capturing device (11) with the intermediate area image at the joint portion joining the image captured at the current time by the forward capturing device (11) with the intermediate area image, and
the misalignment calculation portion calculates the misalignment at the joint portion joining the image captured at the current time by the backward capturing device (12) with the intermediate area image or at the joint portion joining the image captured at the current time by the forward capturing device (11) with the intermediate area image.

9. The vehicular image processing device according to claim 7 or 8, wherein,
(i) when the determination portion determines that the vehicle (C) is in the backward movement state and the misalignment calculation portion calculates the misalignment at the joint portion joining the image captured at the current time by the forward capturing device (11) with the intermediate area image, the correction portion corrects the intermediate area image in a manner that the misalignment generated at one end of the intermediate area image joined with the image captured at the current time by the forward capturing device (11) is decreased and an end of the intermediate area (R3) opposite to the end joined with the image captured at the current time by the forward capturing device (11) is maintained without change, and
(ii) when the determination portion determines that the vehicle (C) is in the forward movement state and the misalignment calculation portion calculates the misalignment at the joint portion joining the image captured at the current time by the backward capturing device (12) with the intermediate area image, the correction portion corrects the intermediate area image in a manner that the misalignment generated at one end of the intermediate area image joined with the image captured at the current time by the backward capturing device (12) is decreased and an end of the intermediate area (R3) opposite to the end joined with the image captured at the current time by the backward capturing device (12) is maintained without change.

10. The vehicular image processing device according to any one of claims 7 to 9, wherein
the images captured at the current time include images of a plurality of capturing targets (G3) that have equal shape and equal size and are arranged in the travel direction of the vehicle (C),
the vehicular image processing device further includes a difference determination portion,
the difference determination portion determines whether an image of one of the plurality of capturing targets (G3) disposed at the joint portion, which joins the image captured at the current time with the target image, is different in shape or dimension from images of the remaining capturing targets (G3) disposed at respective positions other than the joint portion, and
when the difference determination portion determines that the image of one of the plurality of capturing targets (G3) disposed at the joint portion is different in shape or dimension from images of the remaining capturing targets (G3) disposed at respective positions other than the joint portion, the correction portion corrects the display purpose image by eliminating a difference in shape or dimension of the image of the one of plurality of capturing targets (G3) disposed at the joint portion.

11. The vehicular image processing device according to any one of claims 1 to 10, wherein
the capturing portion includes a plurality of capturing devices (31, 32, 33) having respective capture ranges partially overlapped with one another, and
the misalignment calculation portion calculates the misalignment between the images captured by the plurality of capturing devices (31, 32, 33).

## Patentansprüche

1. Fahrzeug-Bildverarbeitungsvorrichtung, die auf ein Fahrzeug (C) anwendbar ist und mit der das Fahrzeug ausgestattet ist, wobei die Fahrzeug-Bildverarbeitungsvorrichtung umfasst:
einen Aufnahmeabschnitt (11, 12), der Bilder innerhalb eines spezifizierten Raums um das Fahrzeug (C) herum aufnimmt;
einen Anzeigeabschnitt (14), der ein Bild für Anzeigezwecke anzeigt, das basierend auf den vom Aufnahmeabschnitt (11, 12) aufgenommenen Bildern erzeugt wird;
einen Bilderzeugungsabschnitt, der die vom Aufnahmeabschnitt (11, 12) aufgenommenen Bilder zusammenfügt, um das Bild für Anzeigezwecke, das am Anzeigeabschnitt (14) angezeigt werden soll, zu erzeugen;
einen Fehlausrichtungsberechnungsabschnitt, der eine Fehlausrichtung zwischen den Bildern an einem Fügeabschnitt der Bilder bei einer Erzeugung des Bildes für Anzeigezwecke berechnet;
einen Korrekturabschnitt, der das Bild für Anzeigezwecke basierend auf der Fehlausrichtung korrigiert;
einen Anzeigesteuerabschnitt, der den Anzeigeabschnitt (14) so steuert, dass das korrigierte Bild für Anzeigezwecke angezeigt wird;
einen Zustandserfassungsabschnitt, der einen Fahrzustand des Fahrzeugs (C) erfasst, wenn der Aufnahmeabschnitt (11, 12) das Bild aufnimmt; und
einen Speicherabschnitt, der das vom Aufnahmeabschnitt (11, 12) aufgenommene Bild als ein Historienbild speichert, wobei
der Bilderzeugungsabschnitt das im Speicherabschnitt gespeicherte Historienbild mit dem zu einem aktuellen Zeitpunkt vom Aufnahmeabschnitt (11, 12) aufgenommenen Bild basierend auf dem Fahrzeugzustand des Fahrzeugs (C) zusammenfügt, um das Bild für Anzeigezwecke zu erzeugen, und
der Fehlausrichtungsberechnungsabschnitt die Fehlausrichtung zwischen dem Historienbild und dem zum aktuellen Zeitpunkt aufgenommenen Bild berechnet, **dadurch gekennzeichnet, dass**
das Fahrzeug (C) eine Vorwärtsaufnahmevorrichtung (11) und eine Rückwärtsaufnahmevorrichtung (12) als den Aufnahmeabschnitt einschließt, wobei die Vorwärtsaufnahmevorrichtung (11) einen Frontbereich (R1) des Fahrzeugs als einen Aufnahmeraum aufnimmt und die Rückwärtsaufnahmevorrichtung (12) einen Heckbereich (R2) des Fahrzeugs als einen Aufnahmeraum aufnimmt, wobei die sowohl von der Vorwärtsaufnahmevorrichtung (11) als auch der Rückwärtsaufnahmevorrichtung (12) aufgenommenen Bilder verwendet werden, um ein Fahrzeugumgebungsbild zu erzeugen, das einen Umgebungsbereich des Fahrzeugs angibt,
der Umgebungsbereich des Fahrzeugs (C) einen Zwischenbereich (R3) einschließt, der an einem Zwischenabschnitt zwischen dem Aufnahmeraum der Vorwärtsaufnahmevorrichtung (11) und dem Aufnahmeraum der Rückwärtsaufnahmevorrichtung (12) liegt, und sich der Zwischenbereich (R3) nicht mit dem Aufnahmeraum der Vorwärtsaufnahmevorrichtung (11) oder mit dem Aufnahmeraum der Rückwärtsaufnahmevorrichtung (12) überlappt,
der Bilderzeugungsabschnitt als ein Zwischenbereichsbild ein Historienbild verwendet, das von einer Aufnahmevorrichtung aus den zwei Aufnahmevorrichtungen aufgenommen wurde, die in einer Fahrtrichtung des Fahrzeugs (C) auf einer Frontseite positioniert ist, und das Zwischenbereichsbild den Zwischenbereich (R3) angibt,
der Bilderzeugungsabschnitt das von der Vorwärtsaufnahmevorrichtung (11) aufgenommene Bild, das von der Rückwärtsaufnahmevorrichtung (12) aufgenommene Bild, und das Zwischenbereichsbild zusammenfügt, um das Fahrzeugumgebungsbild als das Bild für Anzeigezwecke zu erzeugen, und
der Fehlausrichtungsberechnungsabschnitt die Fehlausrichtung zwischen den Bildern an mindestens einem aus einem Fügeabschnitt, der das von der Vorwärtsaufnahmevorrichtung (11) aufgenommene Bild mit dem Zwischenbereichsbild zusammenfügt, oder einem Fügeabschnitt, der das von der Rückwärtsaufnahmevorrichtung (12) aufgenommene Bild mit dem Zwischenbereichsbild zusammenfügt, berechnet, wobei
der Korrekturabschnitt die Fehlausrichtung zwischen den Bildern an mindestens einem aus dem Fügeabschnitt, der das von der Vorwärtsaufnahmevorrichtung (11) aufgenommene Bild mit dem Zwischenbereichsbild zusammenfügt, oder dem Fügeabschnitt, der das von der Rückwärtsaufnahmevorrichtung (12) aufgenommene Bild mit dem Zwischenbereichsbild zusammenfügt, berechnet, und
der Korrekturabschnitt eine Korrektur am Zwischenbereichsbild vornimmt durch Verarbeiten des Zwischenbereichsbildes in einer Weise, dass die erzeugte Fehlausrichtung an einem Ende des Zwischenbereichsbildes verringert wird und ein gegenüberliegendes Ende des Zwischenbereichs (R3) ohne Veränderung beibehalten wird.

2. Fahrzeug-Bildverarbeitungsvorrichtung nach Anspruch 1, wobei der Bilderzeugungsabschnitt die Bilder am Fügeabschnitt der Bilder in einer überlappenden Weise anordnet, und
der Fehlausrichtungsberechnungsabschnitt die Fehlausrichtung innerhalb eines Überlappungsbereichs zwischen den Bildern berechnet.

3. Fahrzeug-Bildverarbeitungsvorrichtung nach Anspruch 1 oder 2, wobei der Aufnahmeabschnitt (11, 12) eine Vielzahl von Aufnahmevorrichtung (11, 12) einschließt, von denen jede einen voneinander unterschiedlichen Aufnahmeraum besitzt, und
der Bilderzeugungsabschnitt die jeweils von der Vielzahl von Aufnahmevorrichtungen aufgenommenen Bilder zusammenfügt.

4. Fahrzeug-Bildverarbeitungsvorrichtung nach den Ansprüchen 1 bis 3, weiter umfassend:
einen Bestimmungsabschnitt, der bestimmt, ob sich das Fahrzeug (C) in einem Vorwärtsbewegungszustand oder in einem Rückwärtsbewegungszustand befindet, wobei
der Bilderzeugungsabschnitt die Bilder an mindestens einem aus dem Fügeabschnitt, der das von der Vorwärtsaufnahmevorrichtung (11) aufgenommene Bild mit dem Zwischenbereichsbild zusammenfügt, oder dem Fügeabschnitt, der das von der Rückwärtsaufnahmevorrichtung (12) aufgenommene Bild mit dem Zwischenbereichsbild zusammenfügt, entsprechend einem aus dem Vorwärtsbewegungszustand oder dem Rückwärtsbewegungszustand des Fahrzeugs in einer überlappenden Weise anordnet, und
der Fehlausrichtungsberechnungsabschnitt die Fehlausrichtung am Fügeabschnitt zwischen den in der überlappenden Weise angeordneten Bildern berechnet.

5. Fahrzeug-Bildverarbeitungsvorrichtung nach einem der Ansprüche 1 bis 4, weiter umfassend:
einen Unterschiedsbestimmungsabschnitt, der bestimmt, ob sich ein Bild von einem aus einer Vielzahl von Aufnahmezielen (G3), das am Fügeabschnitt der Bilder angeordnet ist, in Form oder Abmessung von Bildern der restlichen Aufnahmeziele (G3) unterscheidet, die an jeweiligen Positionen mit Ausnahme des Fügeabschnitts angeordnet sind, unter einer Bedingung, dass die vom Aufnahmeabschnitt (11, 12) aufgenommenen Bilder Bilder von der Vielzahl von Aufnahmezielen (G3) einschließen, die gleiche Form und gleiche Größe besitzen und in der Fahrtrichtung des Fahrzeugs (C) angeordnet sind,
wobei der Korrekturabschnitt das Bild für Anzeigezwecke durch Tilgen eines Unterschieds in Form oder Abmessung des Bildes des einen aus der Vielzahl von Aufnahmezielen (G3), das am Fügeabschnitt angeordnet ist, korrigiert, wenn der Unterschiedsbestimmungsabschnitt ein Auftreten eines Unterschieds bestimmt.

6. Fahrzeug-Bildverarbeitungsvorrichtung nach einem der Ansprüche 1 bis 3, wobei der Aufnahmeabschnitt (11, 12) die Bilder in einem spezifizierten Intervall aufnimmt, der Speicherabschnitt die im spezifizierten Intervall vom Aufnahmeabschnitt (11, 12) aufgenommenen Bilder als Historienbilder speichert,
der Bilderzeugungsabschnitt eines aus den im Speicherabschnitt gespeicherten Historienbildern als ein Zielbild mit Bezug auf den vom Statuserfassungsabschnitt erfassten Fahrzustand bestimmt und das Zielbild mit dem zu einem aktuellen Zeitpunkt vom Aufnahmeabschnitt (11, 12) aufgenommenen Bild zusammenfügt, um das Bild für Anzeigezwecke zu erzeugen, und
der Fehlausrichtungsberechnungsabschnitt die Fehlausrichtung zwischen dem Zielbild und dem zum aktuellen Zeitpunkt aufgenommenen Bild berechnet.

7. Fahrzeug-Bildverarbeitungsvorrichtung nach Anspruch 6, wobei
der Bilderzeugungsabschnitt als ein Zwischenbereichsbild ein aus den Historienbildern bestimmtes Zielbild verwendet, das von einer aus der Vorwärtsaufnahmevorrichtung (11) oder der Rückwärtsaufnahmevorrichtung (12) aufgenommen wurde und im Speicherabschnitt gespeichert ist, wobei die eine aus der Vorwärtsaufnahmevorrichtung (11) oder der Rückwärtsaufnahmevorrichtung (12) eine Aufnahmevorrichtung aus der Vorwärtsaufnahmevorrichtung und der Rückwärtsaufnahmevorrichtung (12) ist, die in einer Fahrtrichtung des Fahrzeugs auf einer Frontseite positioniert ist, und das Zwischenbereichsbild den Zwischenbereich (R3) angibt,
der Bilderzeugungsabschnitt das zu einem aktuellen Zeitpunkt von der Vorwärtsaufnahmevorrichtung (11) aufgenommene Bild, das zu einem aktuellen Zeitpunkt von der Rückwärtsaufnahmevorrichtung (12) aufgenommene Bild, und das Zwischenbereichsbild zusammenfügt, um als das Bild zu Anzeigezwecken ein Fahrzeugumgebungsbild zu erzeugen, das den Umgebungsbereich des Fahrzeugs angibt,
der Fehlausrichtungsberechnungsabschnitt die Fehlausrichtung zwischen den Bildern an mindestens einem aus einem Fügeabschnitt, der das zum aktuellen Zeitpunkt von der Vorwärtsaufnahmevorrichtung (11) aufgenommene Bild mit dem Zwischenbereichsbild zusammenfügt, oder einem Fügeabschnitt, der das zum aktuellen Zeitpunkt von der Rückwärtsaufnahmevorrichtung (12) aufgenommene Bild mit dem Zwischenbereichsbild zusammenfügt, berechnet,
der Korrekturabschnitt das Fahrzeugumgebungsbild basierend auf der vom Fehlausrichtungsberechnungsabschnitt berechneten Fehlausrichtung korrigiert, und der Anzeigesteuerabschnitt den Anzeigeabschnitt (14) so steuert, dass das vom Korrekturabschnitt korrigierte Fahrzeugumgebungsbild als das Bild für Anzeigezwecke angezeigt wird.

8. Fahrzeug-Bildverarbeitungsvorrichtung nach Anspruch 7, weiter umfassend,
einen Bestimmungsabschnitt, um zu bestimmen, ob sich das Fahrzeug (C) in einem Vorwärtsbewegungszustand oder in einem Rückwärtsbewegungszustand befindet, wobei
wenn der Bestimmungsabschnitt bestimmt, dass sich das Fahrzeug (C) im Vorwärtsbewegungszustand befindet, der Bilderzeugungsabschnitt das zum aktuellen Zeitpunkt von der Rückwärtsaufnahmevorrichtung (12) aufgenommene Bild mit dem Zwischenbereichsbild am Fügeabschnitt überlappt, der das zum aktuellen Zeitpunkt von der Rückwärtsaufnahmevorrichtung (12) aufgenommene Bild mit dem Zwischenbereichsbild zusammenfügt,
wenn der Bestimmungsabschnitt bestimmt, dass sich das Fahrzeug (C) im Rückwärtsbewegungszustand befindet, der Bilderzeugungsabschnitt das zum aktuellen Zeitpunkt von der Vorwärtsaufnahmevorrichtung (11) aufgenommene Bild mit dem Zwischenbereichsbild am Fügeabschnitt überlappt, der das zum aktuellen Zeitpunkt von der Vorwärtsbewegungsvorrichtung (11) aufgenommene Bild mit dem Zwischenbereichsbild zusammenfügt, und
der Fehlausrichtungsberechnungsabschnitt die Fehlausrichtung am Fügeabschnitt, der das zum aktuellen Zeitpunkt von der Rückwärtsaufnahmevorrichtung (12) aufgenommene Bild mit dem Zwischenbereichsbild zusammenfügt, oder am Fügeabschnitt, der das zum aktuellen Zeitpunkt von der Vorwärtsaufnahmevorrichtung (11) aufgenommene Bild mit dem Zwischenbereichsbild zusammenfügt, berechnet.

9. Fahrzeug-Bildverarbeitungsvorrichtung nach Anspruch 7 oder 8, wobei
(i) wenn der Bestimmungsabschnitt bestimmt, dass sich das Fahrzeug (C) im Rückwärtsbewegungszustand befindet und der Fehlausrichtungsberechnungsabschnitt die Fehlausrichtung am Fügeabschnitt, der das zum aktuellen Zeitpunkt von der Vorwärtsaufnahmevorrichtung (11) aufgenommene Bild mit dem Zwischenbereichsbild zusammenfügt, berechnet, der Korrekturabschnitt das Zwischenbereichsbild in einer Weise korrigiert, dass die erzeugte Fehlausrichtung an einem Ende des mit dem zum aktuellen Zeitpunkt von der Vorwärtsaufnahmevorrichtung (11) aufgenommenen Bild zusammengefügten Zwischenbereichsbildes verringert wird, und ein Ende des Zwischenbereichs (R3), das dem mit dem zum aktuellen Zeitpunkt von der Vorwärtsaufnahmevorrichtung (11) aufgenommenen Bild zusammengefügten Ende gegenüberliegt, ohne Veränderung beibehalten wird, und
(ii) wenn der Bestimmungsabschnitt bestimmt, dass sich das Fahrzeug (C) im Vorwärtsbewegungszustand befindet und der Fehlausrichtungsberechnungsabschnitt die Fehlausrichtung am Fügeabschnitt, der das zum aktuellen Zeitpunkt von der Rückwärtsaufnahmevorrichtung (12) aufgenommene Bild mit dem Zwischenbereichsbild zusammenfügt, berechnet, der Korrekturabschnitt das Zwischenbereichsbild in einer Weise korrigiert, dass die erzeugte Fehlausrichtung an einem Ende des mit dem zum aktuellen Zeitpunkt von der Rückwärtsaufnahmevorrichtung (12) aufgenommenen Bild zusammengefügten Zwischenbereichsbildes verringert wird, und ein Ende des Zwischenbereichs (R3), das dem mit dem zum aktuellen Zeitpunkt von der Rückwärtsaufnahmevorrichtung (12) aufgenommenen Bild zusammengefügten Ende gegenüberliegt, ohne Veränderung beibehalten wird.

10. Fahrzeug-Bildverarbeitungsvorrichtung nach einem der Ansprüche 7 bis 9, wobei die zum aktuellen Zeitpunkt aufgenommenen Bilder Bilder von einer Vielzahl von Aufhahmezielen (G3) einschließen, die gleiche Form und gleiche Größe besitzen und in der Fahrtrichtung des Fahrzeugs (C) angeordnet sind,
die Fahrzeug-Bildverarbeitungsvorrichtung weiter einen Unterschiedsbestimmungsabschnitt einschließt,
der Unterschiedsbestimmungsabschnitt bestimmt, ob sich ein Bild von einem aus der Vielzahl von Aufhahmezielen (G3), das am Fügeabschnitt angeordnet ist, der das zum aktuellen Zeitpunkt aufgenommene Bild mit dem Zielbild zusammengefügt, in Form oder Abmessung von Bildern der restlichen Aufnahmeziele (G3) unterscheidet, die an jeweiligen Positionen mit Ausnahme des Fügeabschnitts angeordnet sind, und wenn der Unterschiedsbestimmungsabschnitt bestimmt, dass sich das Bild von einem aus der Vielzahl von Aufhahmezielen (G3), das am Fügeabschnitt angeordnet ist, in Form oder Abmessung von Bildern der restlichen Aufnahmeziele (G3), die an jeweiligen Positionen mit Ausnahme des Fügeabschnitts angeordnet sind, unterscheidet, der Korrekturabschnitt das Bild für Anzeigezwecke durch Tilgen eines Unterschieds in Form oder Abmessung des Bildes des einen aus der Vielzahl von Aufhahmezielen (G3), das am Fügeabschnitt angeordnet ist, korrigiert.

11. Fahrzeug-Bildverarbeitungsvorrichtung nach einem der Ansprüche 1 bis 10, wobei
der Aufnahmeabschnitt eine Vielzahl von Aufnahmevorrichtungen (31, 32, 33) einschließt, die jeweilige, teilweise miteinander überlappende Aufnahmeräume besitzen, und
der Fehlausrichtungsberechnungsabschnitt die Fehlausrichtung zwischen den von der Vielzahl von Aufnahmevorrichtungen (31, 32, 33) aufgenommenen Bildern berechnet.

## Revendications

1. Dispositif de traitement d'image de véhicule applicable à un véhicule (C) et étant monté sur le véhicule, le dispositif de traitement d'image de véhicule comprenant :
une partie de capture (11, 12) capturant des images à l'intérieur d'une plage spécifiée autour du véhicule (C) ;
une partie d'affichage (14) affichant une image objet d'affichage générée sur la base des images capturées par la partie de capture (11, 12) ;
une partie de génération d'image joignant les images capturées par la partie de capture (11, 12) pour générer l'image objet d'affichage à afficher sur la partie d'affichage (14) ;
une partie de calcul de désalignement calculant un désalignement entre les images à une partie de jointure des images dans une génération de l'image objet d'affichage ;
une partie de correction corrigeant l'image objet d'affichage sur la base du désalignement ;
une partie de commande d'affichage commandant la partie d'affichage (14) pour afficher l'image objet d'affichage corrigée ;
une partie d'acquisition d'état acquérant un état de marche du véhicule (C) lorsque la partie de capture (11, 12) capture l'image ; et
une partie de stockage stockant l'image capturée par la partie de capture (11, 12) en tant qu'image d'historique, dans lequel
la partie de génération d'image joint l'image d'historique stockée dans la partie de stockage avec l'image capturée à un instant actuel par la partie de capture (11, 12) sur la base de l'état de marche du véhicule (C) pour générer l'image objet d'affichage, et
la partie de calcul de désalignement calcule le désalignement entre l'image d'historique et l'image capturée à l'instant actuel, **caractérisé en ce que** le véhicule (C) inclut un dispositif de capture vers l'avant (11) et un dispositif de capture vers l'arrière (12) en tant que partie de capture, le dispositif de capture vers l'avant (11) capture une zone à l'avant (R1) du véhicule en tant que plage de capture et le dispositif de capture vers l'arrière (12) capture une zone à l'arrière (R2) du véhicule en tant que plage de capture, les images capturées par à la fois le dispositif de capture vers l'avant (11) et le dispositif de capture vers l'arrière (12) sont utilisées pour générer une image des environs du véhicule indiquant une zone environnante du véhicule,
la zone environnante du véhicule (C) inclut une zone intermédiaire (R3) située au niveau d'une partie intermédiaire entre la plage de capture du dispositif de capture vers l'avant (11) et la plage de capture du dispositif de capture vers l'arrière (12), et la zone intermédiaire (R3) ne se recouvre pas avec la plage de capture du dispositif de capture vers l'avant (11) ou avec la plage de capture du dispositif de capture vers l'arrière (12),
la partie de génération d'image utilise, en tant qu'image de zone intermédiaire, une image d'historique capturée par un dispositif de capture qui est positionné au niveau d'une face avant dans une direction de marche du véhicule (C) parmi deux dispositifs de capture, et l'image de zone intermédiaire indique la zone intermédiaire (R3),
la partie de génération d'image joint l'image capturée par le dispositif de capture vers l'avant (11), l'image capturée par le dispositif de capture vers l'arrière (12) et l'image de zone intermédiaire pour générer l'image des environs du véhicule en tant qu'image objet d'affichage, et
la partie de calcul de désalignement calcule le désalignement entre les images au niveau d'au moins une d'une partie de jointure joignant l'image capturée par le dispositif de capture vers l'avant (11) à l'image de zone intermédiaire ou d'une partie de jointure joignant l'image capturée par le dispositif de capture vers l'arrière (12) à l'image de zone intermédiaire, dans lequel
la partie de correction calcule le désalignement entre les images au niveau d'au moins une de la partie de jointure joignant l'image capturée par le dispositif de capture vers l'avant (11) à l'image de zone intermédiaire ou de la partie de jointure joignant l'image capturée par le dispositif de capture vers l'arrière (12) à l'image de zone intermédiaire, et
la partie de correction réalise une correction pour l'image de zone intermédiaire par un traitement de l'image de zone intermédiaire de manière que le désalignement généré au niveau d'une extrémité de l'image de zone intermédiaire soit diminué et une extrémité opposée de la zone intermédiaire (R3) soit conservée sans changement.

2. Dispositif de traitement d'image de véhicule selon la revendication 1, dans lequel la partie de génération d'image agence les images de manière recouverte au niveau de la partie de jointure des images, et
la partie de calcul de désalignement calcule le désalignement à l'intérieur d'une zone de recouvrement entre les images.

3. Dispositif de traitement d'image de véhicule selon la revendication 1 ou 2, dans lequel
la partie de capture (11, 12) inclut une pluralité de dispositifs de capture (11, 12) qui ont chacun une plage de capture différente les unes des autres, et
la partie de génération d'image joint les images respectivement capturées par la pluralité de dispositifs de capture.

4. Dispositif de traitement d'image de véhicule selon les revendications 1 à 3, comprenant en outre :
une partie de détermination déterminant si le véhicule (C) est dans un état de mouvement vers l'avant ou dans un état de mouvement vers l'arrière, dans lequel la partie de génération d'image agence les images de manière recouverte au niveau d'au moins une de la partie de jointure joignant l'image capturée par le dispositif de capture vers l'avant (11) à l'image de zone intermédiaire ou de la partie de jointure joignant l'image capturée par le dispositif de capture vers l'arrière (12) à l'image de zone intermédiaire correspondant à un de l'état de mouvement vers l'avant ou de l'état de mouvement vers l'arrière du véhicule, et
la partie de calcul de désalignement calcule le désalignement au niveau de la partie de jointure entre les images agencées de manière recouverte.

5. Dispositif de traitement d'image de véhicule selon l'une quelconque des revendications 1 à 4, comprenant en outre :
une partie de détermination de différence déterminant si une image d'une d'une pluralité de cibles de capture (G3) disposée au niveau de la partie de jointure des images est différente en forme ou en dimension des images des cibles de capture (G3) restantes disposées au niveau de positions respectives autres que la partie de jointure dans une condition selon laquelle les images capturées par la partie de capture (11, 12) incluent des images de la pluralité de cibles de capture (G3) qui ont une même forme ou une même taille et sont agencées dans la direction de marche du véhicule (C),
dans lequel la partie de correction corrige l'image objet d'affichage en éliminant une différence dans la forme ou dans la dimension de l'image de l'une de la pluralité de cibles de capture (G3) disposée au niveau de la partie de jointure lorsque la partie de détermination de différence détermine une apparition d'une différence.

6. Dispositif de traitement d'image de véhicule selon l'une quelconque des revendications 1 à 3, dans lequel
la partie de capture (11, 12) capture les images à un intervalle spécifié,
la partie de stockage stocke les images capturées à l'intervalle spécifié par la partie de capture (11, 12) en tant qu'images d'historique,
la partie de génération d'image détermine une des images d'historique stockées dans la partie de stockage en tant qu'image cible avec référence à l'état de marche acquis par la partie d'acquisition d'état, et joint l'image cible à l'image capturée à un instant actuel par la partie de capture (11, 12) pour générer l'image objet d'affichage, et
la partie de calcul de désalignement calcule le désalignement entre l'image cible et l'image capturée à l'instant actuel.

7. Dispositif de traitement d'image de véhicule selon la revendication 6, dans lequel la partie de génération d'image utilise, en tant qu'image de zone intermédiaire, une image cible déterminée à partir des images d'historique capturées par un du dispositif de capture vers l'avant (11) ou du dispositif de capture vers l'arrière (12) et stockées dans la partie de stockage, l'un du dispositif de capture vers l'avant (11) ou du dispositif de capture vers l'arrière (12) est un dispositif de capture positionné au niveau d'une face avant dans une direction de marche du véhicule parmi le dispositif de capture vers l'avant et le dispositif de capture vers l'arrière (12), et l'image de zone intermédiaire indique la zone intermédiaire (R3),
la partie de génération d'image joint l'image capturée à un instant actuel par le dispositif de capture vers l'avant (11), l'image capturée à un instant actuel par le dispositif de capture vers l'arrière (12) et l'image de zone intermédiaire pour générer une image des environs du véhicule, qui indique la zone environnante du véhicule, en tant qu'image objet d'affichage,
la partie de calcul de désalignement calcule le désalignement entre les images au niveau d'au moins une d'une partie de jointure joignant l'image capturée à l'instant actuel par le dispositif de capture vers l'avant (11) à l'image de zone intermédiaire ou d'une partie de jointure joignant l'image capturée à l'instant actuel par le dispositif de capture vers l'arrière (12) à l'image de zone intermédiaire,
la partie de correction corrige l'image des environs du véhicule sur la base du désalignement calculé par la partie de calcul de désalignement, et
la partie de commande d'affichage commande la partie d'affichage (14) pour afficher l'image des environs du véhicule corrigée par la partie de correction en tant qu'image objet d'affichage.

8. Dispositif de traitement d'image de véhicule selon la revendication 7, comprenant en outre :
une partie de détermination pour déterminer si le véhicule (C) est dans un état de mouvement vers l'avant ou dans un état de mouvement vers l'arrière, dans lequel,
lorsque la partie de détermination détermine que le véhicule (C) est dans l'état de mouvement vers l'avant, la partie de génération d'image recouvre l'image capturée à l'instant actuel par le dispositif de capture vers l'arrière (12) avec l'image de zone intermédiaire au niveau de la partie de jointure joignant l'image capturée à l'instant actuel par le dispositif de capture vers l'arrière (12) à l'image de zone intermédiaire,
lorsque la partie de détermination détermine que le véhicule (C) est dans l'état de mouvement vers l'arrière, la partie de génération d'image recouvre l'image capturée à l'instant actuel par le dispositif de capture vers l'avant (11) avec l'image de zone intermédiaire au niveau de la partie de jointure joignant l'image capturée à l'instant actuel par le dispositif de capture vers l'avant (11) à l'image de zone intermédiaire, et
la partie de calcul de désalignement calcule le désalignement au niveau de la partie de jointure joignant l'image capturée à l'instant actuel par le dispositif de capture vers l'arrière (12) à l'image de zone intermédiaire ou au niveau de la partie de jointure joignant l'image capturée à l'instant actuel par le dispositif de capture vers l'avant (11) à l'image de zone intermédiaire.

9. Dispositif de traitement d'image de véhicule selon la revendication 7 ou 8, dans lequel,
(i) lorsque la partie de détermination détermine que le véhicule (C) est dans l'état de mouvement vers l'arrière et la partie de calcul de désalignement calcule le désalignement au niveau de la partie de jointure joignant l'image capturée à l'instant actuel par le dispositif de capture vers l'avant (11) à l'image de zone intermédiaire, la partie de correction corrige l'image de zone intermédiaire de manière que le désalignement généré au niveau d'une extrémité de l'image de zone intermédiaire jointe à l'image capturée à l'instant actuel par le dispositif de capture vers l'avant (11) soit diminué et une extrémité de la zone intermédiaire (R3) opposée à l'extrémité jointe à l'image capturée à l'instant actuel par le dispositif de capture vers l'avant (11) soit conservée sans changement, et
(ii) lorsque la partie de détermination détermine que le véhicule (C) est dans l'état de mouvement vers l'avant et la partie de calcul de désalignement calcule le désalignement au niveau de la partie de jointure joignant l'image capturée à l'instant actuel par le dispositif de capture vers l'arrière (12) à l'image de zone intermédiaire, la partie de correction corrige l'image de zone intermédiaire de manière que le désalignement généré au niveau d'une extrémité de l'image de zone intermédiaire jointe à l'image capturée à l'instant actuel par le dispositif de capture vers l'arrière (12) soit diminué et une extrémité de la zone intermédiaire (R3) opposée à l'extrémité jointe à l'image capturée à l'instant actuel par le dispositif de capture vers l'arrière (12) soit conservée sans changement.

10. Dispositif de traitement d'image de véhicule selon l'une quelconque des revendications 7 à 9, dans lequel
les images capturées à l'instant actuel incluent des images d'une pluralité de cibles de capture (G3) qui ont une même forme et une même taille et sont agencées dans la direction de marche du véhicule (C),
le dispositif de traitement d'image de véhicule inclut en outre une partie de détermination de différence,
la partie de détermination de différence détermine si une image d'une de la pluralité de cibles de capture (G3) disposée au niveau de la partie de jointure, qui joint l'image capturée à l'instant actuel à l'image cible, est différente en forme et en dimension d'images des cibles de capture (G3) restantes disposées au niveau de positions respectives autres que la partie de jointure, et
lorsque la partie de détermination de différence détermine que l'image d'une de la pluralité de cibles de capture (G3) disposée au niveau de la partie de jointure est différente en forme ou en dimension d'images des cibles de capture restantes (G3) disposées au niveau de positions respectives autres que la partie de jointure, la partie de correction corrige l'image objet d'affichage en éliminant une différence de forme ou de dimension de l'image de l'une de la pluralité de cibles de capture (G3) disposée au niveau de la partie de jointure.

11. Dispositif de traitement d'image de véhicule selon l'une quelconque des revendications 1 à 10, dans lequel
la partie de capture inclut une pluralité de dispositifs de capture (31, 32, 33) ayant des plages de capture respectives se recouvrant partiellement les unes avec les autres, et
la partie de calcul de désalignement calcule le désalignement entre les images capturées par la pluralité de dispositifs de capture (31, 32, 33).
